(19) **Europäisches Patentamt**

**European Patent Office**

**Office européen des brevets**

(11) Veröffentlichungsnummer: **0 221 197**
**A1**

(12) **EUROPÄISCHE PATENTANMELDUNG**

(21) Anmeldenummer: **85114063.2**

(22) Anmeldetag: **05.11.85**

(51) Int. Cl.⁴: **A01C 23/02**

(43) Veröffentlichungstag der Anmeldung:
**13.05.87 Patentblatt 87/20**

(84) Benannte Vertragsstaaten:
**AT BE CH DE FR GB IT LI NL SE**

(71) Anmelder: **Wolf-Geräte GmbH**
**Gregor-Wolf-Strasse Postfach 860 und 880**
**D-5240 Betzdorf/Sieg(DE)**

(72) Erfinder: **Orth, Günther**
**Kapellenweg 19**
**D-5245 Birken/Sieg(DE)**
Erfinder: **Schuhen, Friedhelm**
**Heldenwiese 2**
**D-5241 Steinebach(DE)**

(74) Vertreter: **Koch, Günther, Dipl.-Ing. et al**
**Postfach 920**
**D-8000 München 33(DE)**

(54) **Verfahren und Vorrichtung zum Düngen von mit dichtem Pflanzenbestand bewachsenen Flächen.**

㊄ Zum Einbringen flüssiger Düngemittel in den Wurzelhorizont des Pflanzenbestandes oder unter diesen Wurzelhorizont sind Injektionsdüsen vorgesehen, die in einer vorgeschnittenen Rille laufen und über eine Druckpumpe mit Nährflüssigkeit vorsorgt werden. Die Rille wird durch eine Kombination eines vorlaufenden Scheibenseches(32)und eines nachlaufenden Schneidmessers(34)bereitet, die von einem Maschinenrahmen getragen werden, der an der Dreipunkthydraulik (14)eines Schleppers(10)anhängbar ist. Das Scheibensech(32)wird dabei über einen Parallelogram-Getriebelenker (28, 29, 18)und einen von der Zapfwelle des Schleppers angetriebenen Varioexzenter(30)in Schwingungen versetzt. Die Kombination von Scheibensech(32),Messer(34)und an dessen Hint rand angeschweißter Injektionsdüse(46)ist entsprechend der gewünschten Arbeitsbreite des Gerätes mehrfach vorhanden, wobei die einzelnen Kombinationen stufenlos in ihrem seitlichen Abstand verstellbar sind.

FIG. 1

## Verfahren und Vorrichtung zum Düngen von mit dichtem Pflanzenbestand bewachsenen Flächen

Die Erfindung bezieht sich auf ein Verfahren und eine Vorrichtung zum Düngen von mit dichtem Pflanzenbestand bewachsenen Flächen, insbesondere von Wiesen und Weiden, aber auch beispielsweise von Getreidebeständen.

Es sind zahlreiche Verfahren und Maschinen bekanntgeworden, um Dünger in Granulatform, in Pulverform oder auch als Nährlösung zu versorgen, wobei das Austragen des Düngers immer von oben her erfolgte, wenn nicht der Boden mit der Grasnarbe oder dergleichen merkbar und nachhaltig beschädigt wurde, wenn man eine Tiefendüngung anstrebte.

Eine Tiefendüngung ist jedoch insbesondere bei Grasnarben auf Sportplätzen höchst erwünscht. Diese Grasnarben verfügen zum überwiegenden Teil zum Erreichen einer befriedigenden Scherfestigkeit nicht über die notwendige Tiefe der Wurzelabsenkung. Es bildet sich in den oberen vier bis fünf Zentimetern ein spezieller Vegetationshorizont, in welchem u.a. auch die Nährstoffumsetzung erfolgt. In diesem Vegetationshorizont findet die Graspflanze alle notwendigen Nährstoffe, die durch die laufende Düngung des Rasens von oben her zugeführt werden. Daher besteht für die Pflanzen keinerlei Veranlassung, die Wurzeln auf der Suche nach Nährstoffen in tiefere Bodenschichten abzusenken, wie dies im Sinne der Erreichung einer befriedigenden Scherfestigkeit erwünscht wäre.

Verbunden mit der geringen Wurzelabsenkung sind außerdem die Gefahr der schnellen Austrocknung solcher Rasenflächen und die Konzentration möglicher Krankheitserreger in dieser relativ dünnen Schicht.

Der Erfindung liegt daher die Aufgabe zugrunde, die Düngung derart zu bewerkstelligen, daß das Wurzelwachstum nach unten angeregt wird, wobei vorrichtungsmäßig eine einfach aufgebaute Maschine geschaffen werden soll, die an jeden Schlepper anbaubar ist.

Verfahrensmäßig gelöst wird die gestellte Aufgabe dadurch, daß die Nährstoffe in oder unter den Wurzelhorizont der Pflanzen injiziert werden. Dabei werden die Nährstoffe in gelöster Form in schmalen parallelen Rillen im Pflanzenbestand injiziert, so daß eine Beschädigung des Pflanzenbestandes weitgehend verhindert ist.

Vorrichtungsmäßig wird zur Herstellung der dünnen Düngerillen eine Maschine vorgesehen, die schmale Schneidmesser nebeneinander aufweist, denen in Fahrtrichtung unmittelbar jeweils eine Injektionsdüse nachgeschaltet ist.

Insbesondere wird die gestellte Aufgabe gelöst durch die Kombination jeweils eines Scheibenseches mit einem nachlaufenden schräggestellten Schneidmesser, auf deren Hinterrand jeweils eine Injektionsdüse angeordnet ist, deren Breitenabmessung die Messerbreite nich überschreitet, so daß ein zuverlässiges Einspritzen der Düngerlösung in die Tiefe gewährleistet wird.

Zur Durchführung eines sauberen Schnittes durch die Scheibenseche werden diese Scheibensechen zweckmäßigerweise in vertikale und horizontale Schwingungen versetzt, die sich überlagern, wobei die Schwingungsebene senkrecht zum Boden in Fahrtrichtung verläuft. Entsprechend der gewünschten Arbeitsbreite des Gerätes sind mehrere Sech-Messer-Injektor-Kombinationen im stufenlos variablen Abstand nebeneinander angeordnet.

Zweckmäßige Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:

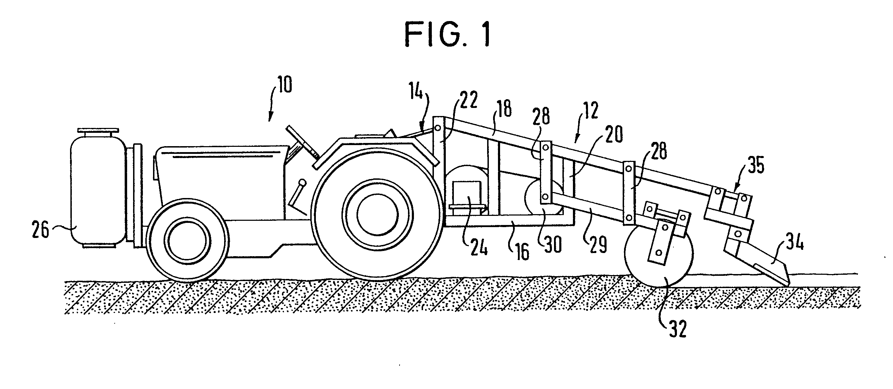

Figur 1 eine schematische Ansicht einer erfindungsgemäße ausgebildeten, an einem Schlepper montierten Untersodendüngungsmaschine und

Figur 2 in größerem Maßstab eine Einzelansicht eines Schneidmessers.

An die Dreipunkthydraulik 14 eines Schleppers 10 ist eine erfindungsgemäß ausgebildete Düngungsmaschine 12 angebaut. Diese weist einen starren Rahmen auf, der jeweils einen unteren, horizontal verlaufenden Träger 16, einen oberen, schräg nach hinten unten weisenden Träger 18 und zwei vertikale Träger 20 und 22 auf. Der starre Rahmen kann nebeneinanderliegend mehrere derartige Rahmenträger aufweisen, die durch Querverbindungen versteift sind. Von diesem starren Rahmen wird eine Druckpumpe 24 getragen, die eine flüssige Düngerlösung aus einem vor der Vorderachse des Schleppers von diesem getragenen Faß 26 nach noch zu beschreibenden Injektionsdüsen pumpt.

An dem oberen Rahmenträger 18 sind zwei vertikal stehende Lenker 28 im Abstand zueinander angelenkt, die zusammen mit dem Ranmenträger 18 und einem parallel hierzu zwischen den unteren Enden der Lenker angelenkten Träger 29 einen Parallelogramm-Gelenkrahmen bilden. Dieser Parallelogramm-Rahmen wird von einem hinsichtlich der Exzentrizität einstellbaren Varioexzenter 30 in Schwingungen versetzt, und dieser Varioexzenter wird von der Zapfwelle des Schleppers angetrieben. Hierdurch wird das Parallelo grammgelenk in vertikale und horizontale Schwingungen versetzt, die einander überlagern.

Das hintere Ende des Trägers 29 lagert ein Scheibensech 32 in Gestalt einer Messerscheibe, die begünstigt durch die aufgeprägten Schwingungen in vorbestimmter Tiefe in den Boden eindringt und eine schmale Rille einschneidet. In Kombination mit diesem Scheibensech 32 arbeitet jeweils ein in Längsrichtung hierauf ausgerichtetes nachlaufendes Schneidmesser 34, welches von einem Lager 35 am hinteren Ende des Rahmenträgers 18 gehaltert ist.

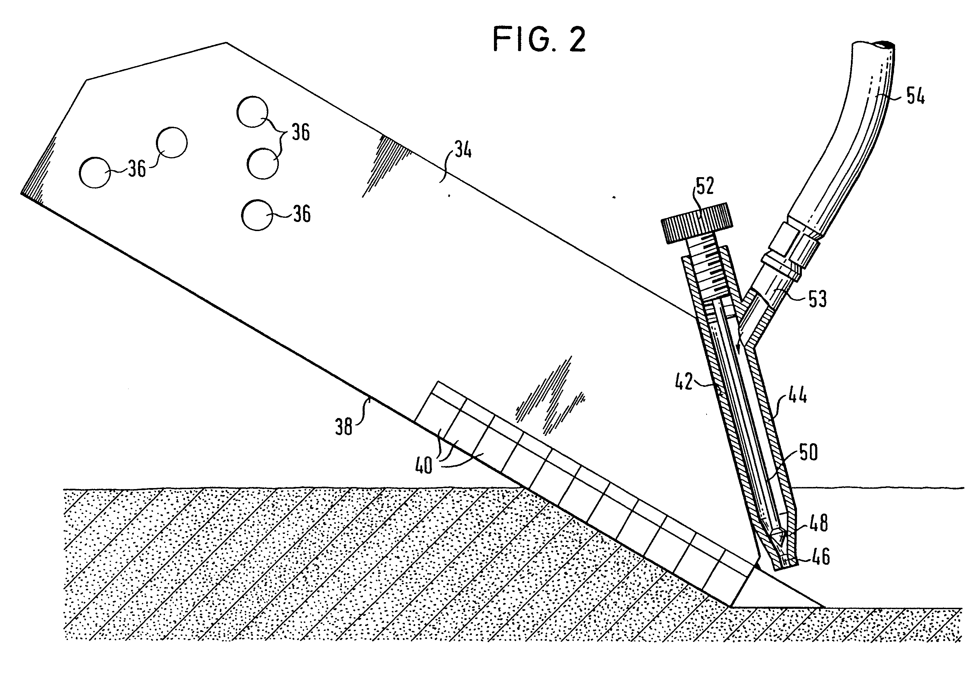

Das Schneidmesser 34 ist im einzelnen aus Figur 2 ersichtlich. Es ist mittels Befestigungslöchern 36 in unterschiedlichen Winkelstellungen gegenüber dem Boden im Lager 35 fixierbar. Die Schneidkante 38 verläuft in einem spitzen Winkel zum Boden, und sie ist an den mit dem Boden in Berührung kommenden Stellen mit Hartmetallblechen 40 verstärkt, deren Breite relativ gering ist, um die Bruchgefahr zu vermindern. An dem steiler geneigt zum Boden verlaufenden Hinterrand 42 des Messers 34 ist ein Rohr 44 mit einer nach unten gerichteten Injektionsdüse angeschweißt. Der Querschnitt der Düsenöffnung ist durch einen Dosierkegel 48 veränderbar, der an einer das Rohr 44 konzentrisch durchlaufenden Stellstange 50 sitzt, welche durch eine in einem Gewinde im hinteren Abschnitt des Rohres laufende Feststellschraube 52 axial verschieblich ist. Im Rohr 44 mündet ein Stutzen 43, an den ein Druckschlauch 54 ansetzt, welcher von der von der Zapfwelle des Schleppers angetriebenen Druckpumpe 24 gespeist wird. Das Rohr 44 entspricht in seinem Durchmesser der Stärke bzw. Breite des Schneidmessers 34 und ist mit diesem so verschweißt, daß Schneidmesser und Rohr 44 eine glatte Fläche bilden.

Die für die Erfindung wesentliche Kombination von in Fahrtrichtung aufeinanderfolgended Teilen, nämlich Scheibensech 32, Schneidmesser 34 und Rohr 44 mit Injektionsdüse 46 ist in der Maschine nebeneinander liegend in mehrfacher Ausführung vorgesehen, so daß bei jedem Durchlauf mehrere schmale Rillen eingeschnitten und im Wurzelbereich mit Düngerlösung vorsorgt werden können.

Der Schlepper 10 zieht die Düngungsmaschine 12 über den Boden, wobei über die Schlepperzapfwelle sowohl die Druckpumpe 24 als auch der Varioexzenter 30 angetrieben werden. Der Varioexzenter 30 versetzt die dem Vorschnitt dienenden, nebeneinander laufenden Scheibenseche über das Parallelogrammgetriebe 18, 28, 29 in schwingende Bewegung. Das jedem Scheibensech 32 nachlaufende Schneidmesser 34 ist manuell oder automatisch in der Tiefenführung regulierbar. Entsprechend der gewünschten Arbeitsbreite des Gerätes sind mehrere Sech-Messer-Kombinationen im stufenlos variablen Abstand nebeneinander angeordnet.

Durch die Injektionsdüsen 46, die hinter dem Messer in der eingeschnittenen Rille laufen, wird die Düngerlösung in oder unter den Wurzelhorizont der Pflanzen injiziert, so daß sich die Wurzeln ihre Nährstoffe von unten her versorgen müssen und daher das Tiefenwachstum der Wurzeln begünstigt wird.

## Ansprüche

1. Verfahren zum Düngen von mit dichtem Pflanzenbestand bewachsenen Flächen, insbesondere von Grasnarben, dadurch gekennzeichnet, daß die Nährstoffe in oder unter den Wurzelhorizont der Pflanzen injiziert werden.

2. Verfahren nach Anspruch 1, dadurch gekennzeichnet, daß der Pflanzenbestand durch schwingende Messer mit schmalen parallelen Rillen versehen wird, in die die Nährstoffe in gelöster Form unmittelbar nach Einschneiden der Rille injiziert werden.

3. Maschine zur Durchführung des Verfahrens nach Anspruch 1, dadurch gekennzeichnet, daß in einem Rahmen nebeneinander mehrere Schneidkombinationen von jeweils
a) einem vorschneidendem Scheibensech (32),
b) einem in Fahrtrichtung auf das Scheibensech ausgerichteten Schneidmesser (34) und
c) nachlaufender Injektordüse
angeordnet sind, wobei die Injektordüse (46) mit unter Druck stehendem flüssingen Düngemittel versorgbar ist.

4. Naschine nach Anspruch 3, dadurch gekennzeichnet, daß das Schneidmesser -(34) eine vorlaufende Schneidkante (38) mit einstellbarem spitzen Winkel gegenüber dem Boden und einen Hinterrand (42) aufweist, an dem ein Rohr (44) mit Injektionsdüse (46) festgelegt ist.

5. Maschine nach Anspruch 4, dadurch gekennzeichnet, daß die Breite des am unteren Ende mit der Düse (46) versehenen Rohres (44) gleich oder kleiner ist wie die Breite des von der Hinterkante (42) gebildeten Messerrückens.

6. Maschine nach den Ansprüchen 3 bis 5, dadurch gekennzeichnet, daß der Auslaßquerschnitt jeder Injektionsdüse (46) über einen Kegel (48) einstellbar ist, der über eine koaxiale Stellstange -(50) und eine Feststellschraube (52) betätigbar ist.

7. Maschine nach den Ansprüchen 3 bis 6, dadurch gekennzeichnet, daß die Schneidkante - (38) des Schneidmessers (34) mit einer Hartmetalleiste versehen ist, die aus mehreren Hartmetallblättchen (40) zusammengesetzt ist.

8. Maschine nach Anspruch 3, dadurch gekennzeichnet, daß jede Scheibenseche (32) von einem Parallelogramm-Gelenkrahmen (38, 18, 29) getragen wird, der in Längsrichtung - schwingbar an einem starren Rahmenträger (18) angelenkt ist.

9. Maschine nach Anspruch 8, dadurch gekennzeichnet, daß jeder Parallelogramm-Gelenkrahmen durch einen Varioexzenter in Schwingungsbewegungen versetzbar ist, wobei die Schwingungen in einer Ebene verlaufen, die in Fahrtrichtung und senkrecht zur Bodenfläche verläuft.

10. Maschine nach einem der Ansprüche 3 bis 9, dadurch gekennzeichnet, daß der starre Maschinenrahmen eine von der Zapfwelle des Schleppers gespeiste Druckpumpe (24) trägt, die über Druckschläuche (54) mit den Injektionsdüsen (46) verbunden ist und von einem Behälter (26) am Vorderende des Schleppers gespeist wird.

# FIG. 1

0 221 197

# FIG. 2

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | US-A-4 538 532 (C.R. COKER)<br>* ganzes Dokument * | 1,3 | A 01 C 23/02 |
| Y | | 2,4-10 | |
| | --- | | |
| X | US-A-3 319 589 (J.N. MORAN)<br>* Figur 1 * | 1,3 | |
| | --- | | |
| X | DE-A-2 742 193 (HILBERER MASCHINENBAU LANDMASCHINEN)<br>* Ansprüche 1, 5, 15, 16 * | 1 | |
| | --- | | |
| Y | GB-A- 733 629 (T.W. WARD LTD.)<br>* Seite 1, Zeilen 47-54 * | 2,8,9 | |
| | --- | | RECHERCHIERTE SACHGEBIETE (Int. Cl. 4) |
| Y | DE-C- 906 522 (M. OSSONCE)<br>* Anspruch 1 * | 2,8,9 | A 01 C 23/02<br>A 01 C 23/04<br>A 01 C 5/06 |
| | --- | | |
| Y | US-A-4 196 679 (S. MOORE&Anspruch 1) | 4 | |
| | --- | | |
| Y | FR-A- 596 789 (M.M. BOUCHET)<br>* Figur 4 * | 5 | |
| | --- | | |
| Y | AT-B- 293 773 (J.R. GEIGY AG.)<br>* Figuren 2, 5 * | 6 | |
| | ---     -/- | | |

Der vorliegende Recherchenbericht wurde für alle Patentansprüche erstellt.

| Recherchenort<br>BERLIN | Abschlußdatum der Recherche<br>09-06-1986 | Prüfer<br>SAMWEL P.N. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| Y | US-A-4 355 589 (H.J. WETMORE)<br>* Figuren 1, 2; Spalte 2, Zeilen 44-47 *<br><br>--- | 7 | |
| Y | GB-A-1 049 370 (SKANSKA LANTMANNENS MASKIN AB.)<br>* Anspruch 5 *<br><br>----- | 10 | |
| | | | RECHERCHIERTE SACHGEBIETE (Int. Cl.4) |

Der vorliegende Recherchenbericht wurde für alle Patentansprüche erstellt.

| Recherchenort BERLIN | Abschlußdatum der Recherche 09-06-1986 | Prüfer SAMWEL P.N. |
|---|---|---|